# EUROPEAN PATENT SPECIFICATION

(11) **EP 2 822 223 B1**
(45) Date of publication and mention of the grant of the patent: **05.10.2016**
(21) Application number: 14174102.5
(22) Date of filing: 26.06.2014
(51) Int. Cl.: H04L 12/26

(54) **Systems and methods for low cost and low power network troubleshooting**
Systeme und Verfahren zur kosten- und leistungseffizienten und Netzwerkfehlersuche
Systèmes et procédés pour dépannage de réseau à faible coût et faible puissance

(30) Priority: 01.07.2013 US 201313932512
(43) Date of publication of application: 07.01.2015
(73) Proprietor: AirMagnet, Inc., Westford MA 01886 (US)
(72) Inventor: Kahkoska, James A., Plano, TX 75075 (US)
(74) Representative: Hargreaves, Timothy Edward

(56) References cited:
- WO-A1-2009/023516
- WO-A2-2012/009332
- US-A1- 2011 001 833
- US-A1- 2011 010 585
- US-A1- 2011 103 235

## Description

### BACKGROUND OF THE INVENTION

### 1. Field of the Invention

The present disclosure relates to network testing and network troubleshooting, and more particularly, to improved systems and methods for improved network testing.

### 2. Description of the Related Art

In order for handheld network testing devices to properly satisfy network testing needs for faster and increasingly complex communication networks, additional processing power have become commonplace. For example, conventional network testing devices can include high speed electronics for testing at increasing network bandwidths (e.g., Gigabit/sec (Gbps)). However, such network testing devices have also become more complex and expensive.

Although such network devices have generally been considered satisfactory for their intended purpose, there is still a need in the art for less expensive network testing devices that still maintain adequate network testing functionality. The present invention provides a solution for these problems.

US2011/0103235 describes a system for performing wireless local area testing, which may include a wireless local area network tester and a device under test. WO 2009/023516 describes an apparatus for testing a wireless communication device including a receiver, a capture module, and a control module.

### SUMMARY

The purpose and advantages of the present invention will be set forth in and become apparent from this disclosure. Additional advantages of the invention will be realized and attained by the methods and systems particularly pointed out in the written description and claims hereof, as well as from the appended drawings.

To achieve these and other advantages and in accordance with the purpose of the invention, as embodied herein, the invention includes systems, methods and apparatuses for network testing. In particular, the subject invention includes an apparatus or network test device for network testing that receives data from a test network and validates, via a Media Access Controller (MAC), a link to the test network based on the received data. The network test device further throttles a rate of the received data from the test network to a lower rate in response to a first condition (e.g., the validated link), and processes the received data at the lower rate via a media access controller (MAC). In some embodiments, the network device receives the data at the lower rate and performs network testing at the lower rate. Such network testing can include, but is not limited to data packet testing such as Ping connectivity tests, Dynamic Host Configuration Protocol (DHCP) tests, and the like. In certain embodiments, the network test device can initially receive data from the test network from four twisted pair media connections (e.g., at a high data rate) in operable communication with the test network and, once a link is validated, the network test device can throttle the rate of the received data to the lower rate by receiving data from the test network via two of the four twisted pair media connections.

Features of one aspect may be combined with other features of the same or other aspects in any appropriate combination. Features of any one claim may be combined with features of any one or more other claims, as appropriate, regardless of the dependency of those claims.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
FIG. 1 is a schematic diagram of an exemplary embodiment of a network test device constructed in accordance with the present invention, showing the network test device connected to a test network;
FIG. 2 is an exploded perspective view of the network test device shown in FIG. 1;
FIG. 3 is a schematic block diagram of a network interface of the network test device shown in FIG. 1;
FIG. 4 is a schematic block diagram of an example processor module of the network tester shown in FIG. 1; and
FIG. 5 illustrates an example simplified procedure for network testing in accordance with one or more embodiments described herein.

### DESCRIPTION OF THE INVENTION

The systems, techniques and processes described herein, provide for improved network test devices that throttle data rates for particular types of network testing so as to require less complex (and less expensive) electronic components. Such systems, techniques and processes achieve these and other needs by providing a network test device that validates a physical media and link partner at one data rate and, once validated, throttles the data rate to a lower data rate for subsequent network testing.

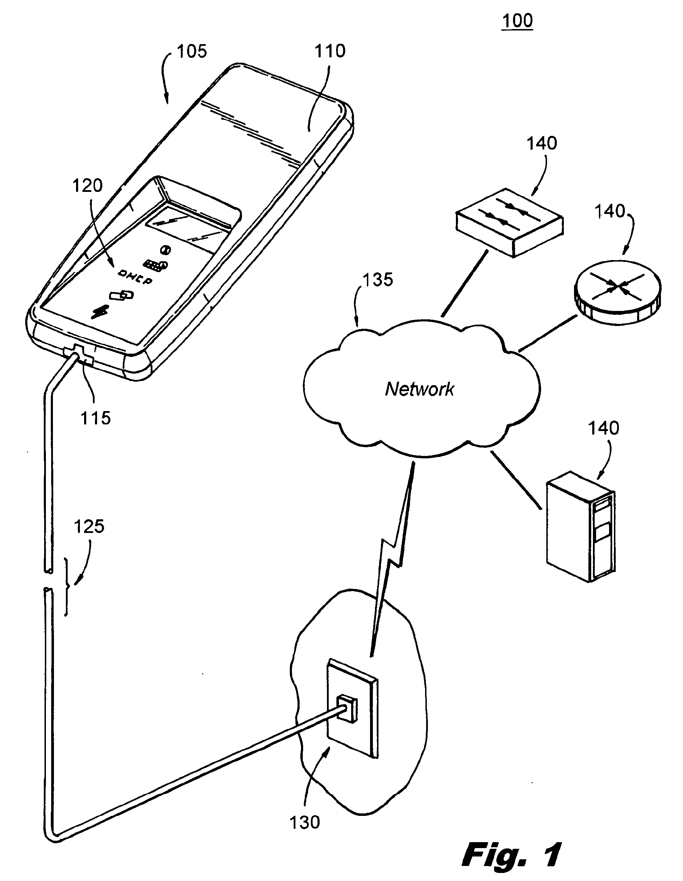

Reference will now be made to the drawings wherein like reference numerals identify similar structural features or aspects of the subject invention. For purposes of explanation and illustration, and not limitation, an exemplary embodiment of the network testing device in accordance with the invention is shown in FIG. 1 and is designated generally by reference character 105. Other embodiments of the network testing device in accordance with the invention, or aspects thereof, are provided in FIGS. 1-6, as will be described. The system of the invention can be used for performing network diagnostic testing and displaying test network conditions.

Referring to FIG. 1, a schematic diagram 100 shows the network test device 105 in accordance with the present disclosure. Operatively, network tester 105 includes a housing member 110 configured and adapted to communicate (e.g., transmit and receive data) with a communication network 135 (i.e., a test network) preferably via a network port 115. In the illustrated embodiment, the network port 115 is a hardwired port configured as RJ-45 network port. It is to be understood, however, that other embodiments are not to be limited to using a RJ-45 port, and any suitable port for coupling to communication network 135 may be used. Notably, an Ethernet network cable 125 can operatively couple network test device 105 (e.g., via network port 115) to a test network 135 (e.g., via a network port 130) including network devices 140 (e.g., switches, routers, servers, etc.). Notably, network port 130 can be a conventional network port present in commercial buildings, residential spaces, etc., which port can include wiring necessary to provide connectivity to a network 135 (e.g., the Internet). As discussed in greater detail below, network ports 115 and 130 can be configured to host Ethernet over twisted pair technologies and use twisted-pair cables for the physical layer of an Ethernet communication network (i.e., network 135).

Network 135 is to be understood to include a communication network that can include various network devices 140 (e.g., such as personal computers and workstations, or other devices, such as sensors, etc.) interconnected by communication links and segments for transporting data therebetween. Many types of networks are available, ranging from local area networks (LANs) to wide area networks (WANs). LANs typically connect the network devices over dedicated private communications links located in the same general physical location, such as a building or campus. WANs, on the other hand, typically connect geographically dispersed network devices over long-distance communications links, such as common carrier telephone lines, optical light paths, synchronous optical networks (SONET), synchronous digital hierarchy (SDH) links, or Powerline Communications (PLC) such as IEEE 61334, IEEE P1901.2, and others.

Still referring to FIG. 1, network tester 105 also includes a display 120 operatively coupled to the housing member 110. The display 120 can be configured and adapted to display one or more network conditions of the test network 135 based on the received data. For example, display 120 can include one or more light emitting diodes (LEDs), which can be powered, based on detection of network conditions such as, but not limited to: power over Ethernet (PoE), a test network connection speed and duplex, a dynamic host configuration protocol (DHCP) address, a gateway test condition, a nearest switch and port identification, and a response time of server connectivity test. The display 120, however, is not to be limited to such LEDs, as other display mechanisms may be used such as liquid crystal display (LCD), organic light emitting diode (OLED), electronic ink (eInk) and other display types capable of displaying information to a user may also be used.

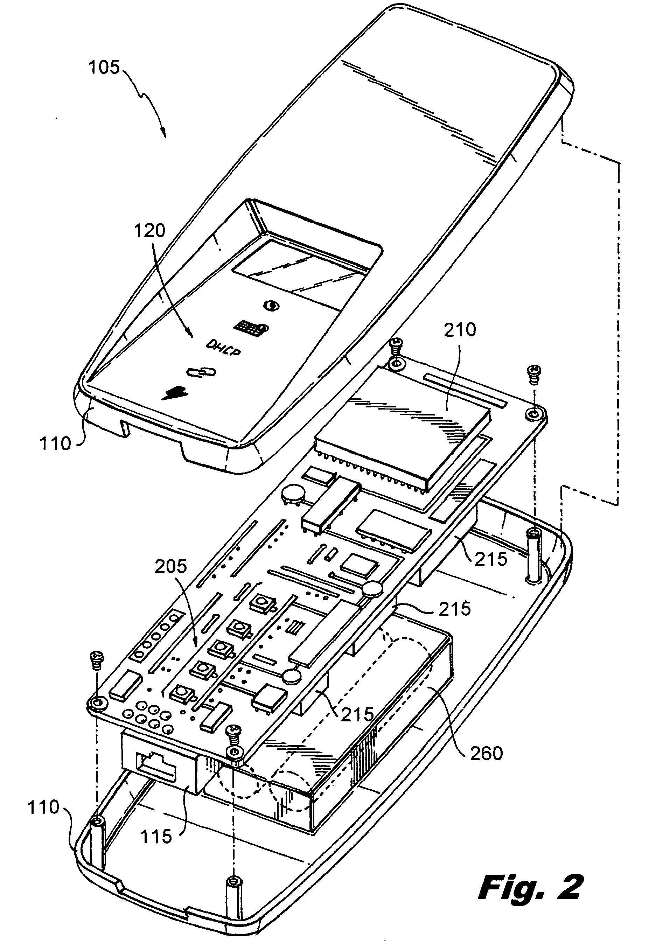

With reference now to FIG. 2, there is shown an exploded perspective of the network test device shown in FIG. 1, showing internal components operatively coupled to and/or enclosed by housing 110. As discussed above, network tester 105 includes one or more LEDs 205, which can indicate (e.g., illuminate) one or more network conditions of display 120. Network test device 105 also includes a processor 210 operatively coupled to network interface circuitry 215. The network interface circuitry 215 includes transformers, wireless access points, Ethernet circuitry, media access controllers (MACs), physical layer controllers (PHYs), etc. Additionally, network test device 105 also includes an independent power supply 260 (e.g., a battery, etc.) enclosed by housing member 110. Notably, although FIG. 2 shows a particular orientation and location of components (e.g., processor 210) with respect to a circuit board, such components can be oriented and placed any suitable location, as is understood by those skilled in the art.

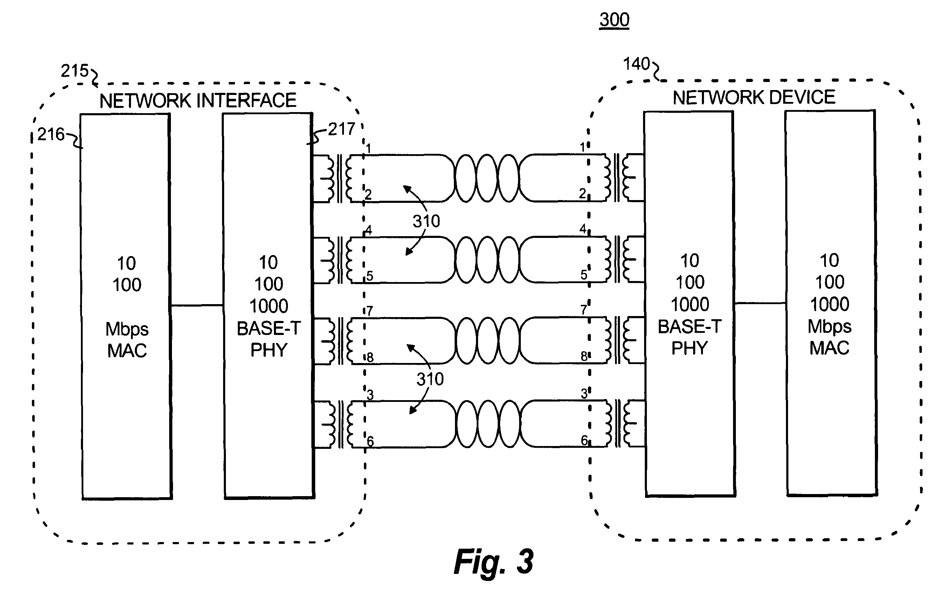

FIG. 3 is a schematic block diagram of network interface 215 of network test device 105 coupled to a network device 140. In particular, FIG. 3 shows network interface 215 connected or coupled, via four (4) twisted pair wires (e.g., Ethernet wires), to one of network devices 140 (e.g., a switch, a router, a server, etc.) of network 135. As discussed above, network interface 215 includes a MAC 216 that negotiates high level medium availability and a physical layer controller or interface (PHY) 217 that directly interfaces with electrical signals. Operatively, as discussed herein, PHY 217 validate a gigabit link to test network device 140 and once the gigabit link is validated, MAC 216 performs additional network testing at a lower data rate. Notably, other embodiments may employ coaxial cable or optical fiber.

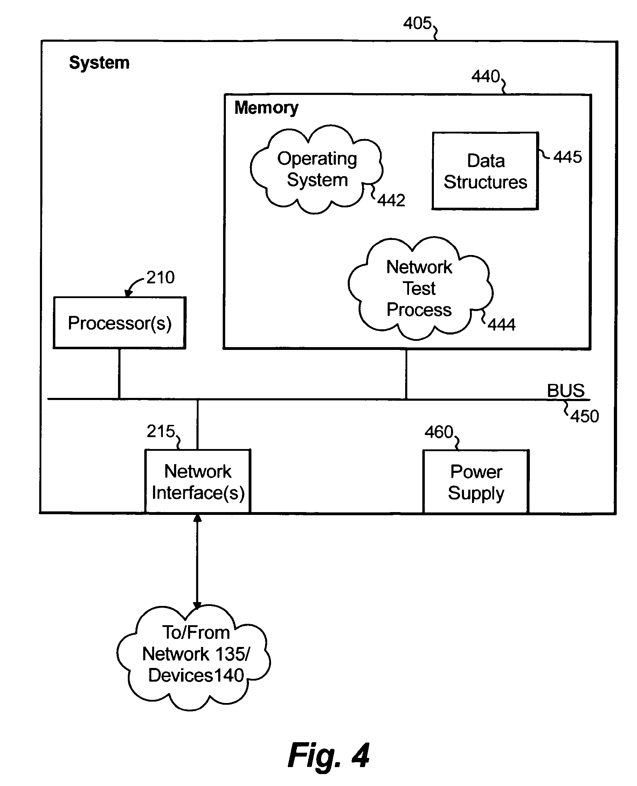

FIG. 4 is a schematic block diagram of an example processor module 405 that may be used with one or more embodiments described herein. Processor module 405 illustratively includes network interfaces 215 (e.g., wired, optical, wireless, etc.), at least one processor 210, and a memory 440 interconnected by a system bus 450.

Further, processor module 405 includes an independent power supply 460. Note, independent power supply 260 of FIG. 2 is shown as a standalone component, however, it is readily appreciated that such power supply 260 can also be part of a larger power system with one or more interconnected power supplies such as power supply 460, as shown here.

The network interface(s) 215 contain the mechanical, electrical, and signaling circuitry for controlling operation of network test device 105, as well as communicating data to/from wireless local area network 135. As discussed above, such circuitry can include, for example, MAC 216 and PHY 217, and may be configured to transmit and/or receive data using a variety of different communication protocols.

Memory 440 comprises a plurality of storage locations that are addressable by the processor 420 and the network interfaces 215 for storing software programs and data structures associated with the embodiments described herein. Note that certain embodiments of processor module 405 may have limited memory or no memory (e.g., no memory for storage other than for programs/processes operating on the device and associated caches). The processor 420 may comprise hardware elements or hardware logic adapted to execute the software programs and manipulate the data structures 445. An operating system 442, portions of which are typically resident in memory 440 and executed by the processor, functionally organizes the device by, *inter alia,* invoking operations in support of software processes and/or services executing on the device. These software processes and/or services may comprise an illustrative network test process/services 444, as described herein. Note that while the process/services are shown in centralized memory 440, alternative embodiments provide for specific operation within the network interfaces 215.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

Network test process (services) 444 contains computer executable instructions executed by the processor 420 to perform network test functions provided by one or more communication and/or routing protocols, as will be understood by those skilled in the art, and as modified according to the techniques described herein. These functions may, for example, be capable of general packet detection/routing/forwarding, etc., according to the associated protocols and the techniques described herein, and using various routing/forwarding tables, lists, mappings, etc. (e.g., data structures 445).

In particular, network test process 444 can cause processor 420 (e.g., via network interfaces 210) to receive data communicated from test network 135 to network test device 105 (e.g., via network port 115). Network test process 444 can also cause processor 420 to validate, via PHY 217, a link to the test network based on the received data. Further, network test process 444 can cause processor 420 to throttle a rate of the received data from the test network to a lower rate in response to a first condition (e.g., the validated link), and process, via MAC 216 subsequently received data at the lower rate. Such processing can include, for example, performing data packet testing (e.g., Ping connectivity testing, Dynamic Host Configuration Protocol (DHCP) testing, etc.).

In some embodiments, processor 420 initially receives data and tests link connectivity at an approximate one (1) Gigabit/second (Gbps) rate via four twisted pair. As used herein, the approximate rate of 1 Gbps is defined according to known industry standards (e.g., IEEE 802.3-2008 standards). Once the link is validated, throttles or limits the rate of data to two of the four twisted pair for subsequent network testing. In this fashion, network test device 105 links, temporarily, at a higher rate to validate a link partner as well as to validate that the connection cable media can operate at the higher rate. Once validated, network test device 105 throttles back to a lower data rate (e.g., 100 Mb for network connectivity testing. In this fashion, network test device 105 can incorporate simpler and less costly circuitry (e.g., a 10/100 MAC). Further, by throttling data, network test device 105 operates at a lower, more efficient processing speed thereby reducing power consumption.

Although steps or elements of network test process 444 are discussed in relation to each other, such ordering is for purposes of explanation and not limitation. That is, such elements of network test process 344 can be performed in any order and independent of each other.

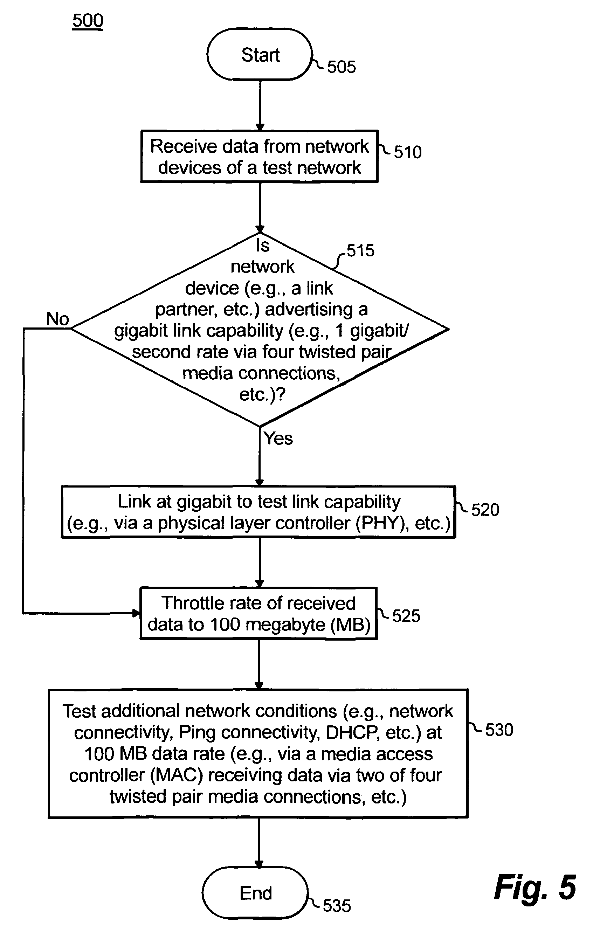

FIG. 5 illustrates an example simplified procedure, i.e., procedure 500, for network testing in accordance with one or more embodiments described herein, particularly from the perspective of the network test device 105. Procedure 500 starts at step 505, and continues to step 510, where, as described in greater detail above, the network test device can receive data from a test network (e.g., from a device 140 from test network 135). Next, in step 515, the network test device can determine if the network device (e.g., a link partner) is advertising gigabit link capability. For example, the network device advertises gigabit link capability via four twisted pair media connections. If the network device is advertising gigabit link capability, procedure 500 continues to step 520 where network test device links at gigabit to validate the link (e.g., via PHY 217, as discussed above). If the device is not advertising gigabit link capability (e.g., a rate of one (1) Gigabit per second (Gbps)), procedure 500 returns to step S10 where network test device receives data from the test network.

Once the network test device links and validates the link capability in step 520, the network test device throttles the rate of received data to a lower rate in step 525 (e.g., 100 megabits/second (Mbs)). In step 530, the network test device tests additional network conditions (e.g., via MAC 216) such as network connectivity (e.g., Ping, Dynamic Host Configuration Protocol (DHCP), etc.) at the lower rate (e.g., 100 Mbs). The procedure 500 subsequently may end in step 545, or, may restart at step 505.

It should be noted that certain steps within procedures 500 may be optional and further, the steps shown are merely examples for illustration, and certain other steps may be included or excluded as desired. Further, while a particular order of the steps is shown, this ordering is merely illustrative, and any suitable arrangement of the steps may be utilized without departing from the scope of the embodiments herein.

The systems, techniques and processes described herein, provide for improved network test devices that are less expensive to manufacture and include lower cost network interface circuitry than conventional network testing devices. Such systems, techniques and processes achieve these and other needs by providing a network test device that validates a gigabit link via a physical layer controller (PHY) and throttling data rates for subsequent network testing once link connectivity is achieved thereby supporting a less complex media access controller (MAC).

While there have been shown and described illustrative embodiments that provide for an improved network testing device, it is to be understood that various other adaptations and modifications may be made within the scope of the present invention as defined by the amended claims.

For example, the embodiments have been shown and described herein with relation to specific Ethernet protocols. However, the embodiments in their broader sense are not as limited, and may, in fact, be used with various other types of wireless protocols (e.g., Bluetooth, NFC technologies, and the like).

The foregoing description has been directed to specific embodiments. It will be apparent; however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/etc.) having program instructions executing on a computer, hardware, firmware, or a combination thereof. Accordingly this description is to be taken only by way of example and not to otherwise limit the scope of the embodiments herein. Therefore, it is the object of the appended claims to cover all such variations and modifications as come within the scope of the present invention as defined by the appended claims.

## Claims

1. A method comprising:
receiving data from a device (140) in a test network (135);
validating, via a physical layer controller, PHY (217), a link to the device (140) in the test network (135) based on the received data;
throttling a rate of the received data from the device (140) in the test network (135) to a lower rate in response to the validated link; and
processing the received data at the lower rate via a media access controller, MAC (216), wherein the processing of the received data at the lower rate comprises performing data packet testing at the lower rate.

2. A method according to Claim 1, wherein the device (140) advertises gigabit link capability, and wherein validating the link to the device (140) comprises validating the gigabit capability of the link.

3. The method of claim 1, wherein performing data packet testing at the lower rate, further comprises performing at least one of a Ping connectivity test and a Dynamic Host Configuration Protocol, HCPCP, test.

4. The method of claim 1, wherein receiving data from the device (140) in the test network (135) comprises receiving data from four twisted pair media connections in operable communication with the device (140) in the test network (135),
and throttling the rate of the received data comprises receiving data from the device (140) in the test network (135) at the lower rate via two of the four twisted pair media connections.

5. The method of claim 1, wherein:-
a) the MAC (216) is a 100 Megabyte, Mb, controller; and/or
b) receiving data from the test network (135) comprises receiving data from the test network (135) at 1 Gigabit per second, Gbps, wherein the lower rate comprises 100 Mbs; and/or
c) validating the link to device (140) in the test network (135) based on the received data comprises linking the MAC (216) at gigabit to validate the link.

6. A apparatus (105) for network testing comprising:
at least one network port (115) that receives data from a device (140) in a test network (135); and
one or more network interfaces (215) including a physical layer controller, PRY (217) and a media access controller, MAC (216) in operative communication with the network port (115);
a processor (210) coupled to the network interfaces (215) and adapted to execute one or more processes; and
a memory (440) configured to store instructions executable by the processor (210), the instructions, when executed by the processor (210), cause the processor (210) to:
receive data from the device (140) in the test network (135) via the at least one network port (115);
validate, via the PHY (217), a link to the device (150) in the test network (135) based on the received data;
throttle a rate of the received data from the test network (135) to a lower rate in response to the validated link; and
process the received data at the lower rate via the MAC (216), wherein the processing of the received data at the lower rate comprises performing data packet testing at the lower rate via the MAC (216).

7. The apparatus (105) of claim 6, wherein the device (140) advertises gigabit link capability, and wherein validating the link to the device (140) comprises validating the gigabit capability of the link.

8. The apparatus (105) of claim 6, wherein the instructions, when executed by the processor (210) to perform data packet testing, further cause the processor (210) to:
perform at least one of a Ping connectivity test and a Dynamic Host Configuration Protocol, DHCP, test.

9. The apparatus (105) of claim 6, wherein the instructions, when executed to receive data from the device (140) in the test network (135) via the at least one network port (115), further cause the processor (210) to receive data from four twisted pair media connections in operable communication with the device (140) in the test network (135).

10. The apparatus (105) of claim 9, wherein the instructions, when executed to throttle the rate of the received data from the test network (135) to the lower rate in response to the validated link, further cause the processor (210) to:
receive data from the device (140) in the test network (135) at the lower rate via two of the four twisted pair media connections,
and the processor (210) receives data from the device (140) in the test network (135) at 1 Gigabit per second, Gbps, wherein the lower rate comprises 100 Megabit/second.

11. A tangible, non-transitory, computer-readable media having software encoded thereon, the software when executed by a processor (210) operable to:
receive data from a device (140) in a test network (135);
validate, via a physical layer controller, PHY (217), a link to the device (140) in the test network (135) based on the received data;
throttle a rate of the received data from the device (140) in the test network (135) to a lower rate in response to the validated link; and
process the received data at the lower rate via a media access controller, MAC (216), wherein the processing of the received data at the lower rate comprises performing data packet testing at the lower rate.

12. The computer-readable media of claim 6, wherein the device (140) advertises gigabit link capability, and wherein validating the link to the device (140) comprises validating the gigabit capability of the link.

13. The computer-readable media of claim 11, wherein the software, when executed by the processor (210) to perform data packet testing at the lower rate is further operable to:
perform at least one of a Ping connectivity test and a Dynamic Host Configuration Protocol, DHCP, test.

14. The computer-readable media of claim 11, wherein the software, when executed by the processor (210) to receive data from the test network (135) is further operable to:
receive data from four twisted pair media connections in operable communication with the device (140) in the test network (135),
and wherein the software, when executed by the processor (210) to throttle the rate of the received data is further operable to:
receive data from the device (140) in the test network (135) at the lower rate in response to the validated link via two of the four twisted pair media connections.

## Patentansprüche

1. Verfahren, Folgendes umfassend:
Empfangen von Daten von einer Vorrichtung (140) in einem Testnetz (135);
Validieren einer Verbindung über eine physikalische Schichtsteuerung, PHY (217), zur Vorrichtung (140) im Testnetz (135), auf den empfangenen Daten basierend;
Drosseln einer Rate der empfangenen Daten von der Vorrichtung (140) im Testnetz (135) auf eine niedrigere Rate als Antwort auf die validierte Verbindung; und
Verarbeiten der empfangenen Daten mit der niedrigeren Rate über eine Medienzugriffssteuerung, MAC (216), worin das Verarbeiten der empfangenen Daten mit der niedrigeren Rate das Ausführen des Testens von Datenpaketen mit der niedrigeren Rate umfasst.

2. Verfahren nach Anspruch 1, worin die Vorrichtung (140) Gigabit-Verbindungsfähigkeit angibt und worin das Validieren der Verbindung zur Vorrichtung (140) das Validieren der Gigabit-Fähigkeit der Verbindung umfasst.

3. Verfahren nach Anspruch 1, worin das Ausführen des Testens von Datenpaketen mit der niedrigeren Rate außerdem das Ausführen von mindestens einem eines Ping-Konnektivitätstests und eines dynamisches-Host-Konfigurationsprotokoll (DHCP)-Tests umfasst.

4. Verfahren nach Anspruch 1, worin das Empfangen von Daten von der Vorrichtung (140) im Testnetz (135) das Empfangen von Daten von vier verdrillten Zweidraht-Medienverbindungen in betriebsbereiter Kommunikation mit der Vorrichtung (140) im Testnetz (135) umfasst,
und das Drosseln der Rate der empfangenen Daten das Empfangen von Daten von der Vorrichtung (140) im Testnetz (135) mit der niedrigeren Rate über zwei der vier verdrillten Zweidraht-Medienverbindungen umfasst.

5. Verfahren nach Anspruch 1, worin:
a) die MAC (216) eine 100 Megabyte (Mb)-Steuerung ist; und/oder
b) das Empfangen von Daten vom Testnetz (135) das Empfangen von Daten vom Testnetz (135) mit 1 Gigabit pro Sekunde, Gbps, umfasst, worin die niedrigere Rate 100 Mbs umfasst; und/oder
c) das Validieren der Verbindung zur Vorrichtung (140) im Testnetz (135) auf der Basis der empfangenen Daten die Verkopplung der MAC (216) mit Gigabit zum Validieren der Verbindung umfasst.

6. Vorrichtung (105) zum Netztesten, Folgendes umfassend:
mindestens einen Netz-Port (115), der von einer Vorrichtung (140) in einem Testnetz (135) Daten empfängt; und
eine oder mehrere Netzschnittstellen (215) einschließlich einer physikalischen Schichtsteuerung, PHY (217), und einer Medienzugriffssteuerung, MAC (216), in betriebsbereiter Kommunikation mit dem Netz-Port (115);
einen Prozessor (210), an die Netzschnittstellen (215) gekoppelt und dazu angepasst, einen oder mehrere Prozesse auszuführen; und
einen Speicher (440), konfiguriert zum Speichern von Anweisungen, die vom Prozessor (210) ausführbar sind, wobei die Anweisungen, wenn sie vom Prozessor (210) ausgeführt werden, den Prozessor (210) veranlassen zum:
Empfangen von Daten von der Vorrichtung (140) im Testnetz (135) über den mindestens einen Netz-Port (115);
Validieren einer Verbindung zur Vorrichtung (150) im Testnetz (135) über die PHY (217), auf den empfangenen Daten basierend;
Drosseln einer Rate der empfangenen Daten vom Testnetz (135) auf eine niedrigere Rate als Antwort auf die validierte Verbindung; und
Verarbeiten der empfangenen Daten mit der niedrigeren Rate über die MAC (216), worin das Verarbeiten der empfangenen Daten mit der niedrigeren Rate das Ausführen des Testens von Datenpaketen mit der niedrigeren Rate über die MAC (216) umfasst.

7. Vorrichtung (105) nach Anspruch 6, worin die Vorrichtung (140) Gigabit-Verbindungsfähigkeit angibt und worin das Validieren der Verbindung zur Vorrichtung (140) das Validieren der Gigabitfähigkeit der Verbindung umfasst.

8. Vorrichtung (105) nach Anspruch 6, worin die Anweisungen, wenn sie vom Prozessor (210) ausgeführt werden, um das Testen von Datenpaketen auszuführen, den Prozessor (210) außerdem veranlassen zum:
Ausführen von mindestens einem eines Ping-Konnektivitätstests und eines dynamisches-Host-Konfigurationsprotokoll (DHCP)-Tests.

9. Vorrichtung (105) nach Anspruch 6, worin die Anweisungen, wenn sie zum Empfangen von Daten von der Vorrichtung (140) im Testnetz (135) über den mindestens einen Netz-Port (115) ausgeführt werden, den Prozessor (210) außerdem dazu veranlassen, Daten von vier verdrillten Zweidraht-Medienverbindungen in betriebsbereiter Kommunikation mit der Vorrichtung (140) im Testnetz (135) zu empfangen.

10. Vorrichtung (105) nach Anspruch 9, worin die Anweisungen, wenn sie ausgeführt werden, um die Rate der empfangenen Daten vom Testnetz (135) als Antwort auf die validierte Verbindung auf die niedrigere Rate zu drosseln, den Prozessor (210) außerdem veranlassen zum:
Empfangen von Daten von der Vorrichtung (140) im Testnetz (135) mit der niedrigeren Rate über zwei der vier verdrillten Zweidraht-Medienverbindungen,
und der Prozessor (210) empfängt Daten von der Vorrichtung (140) im Testnetz (135) mit 1 Gigabit pro Sekunde, Gbps, worin die niedrigere Rate 100 Megabit/Sekunde umfasst.

11. Konkretes nichttransitorisches, computerlesbares Medium mit darauf codierter Software, wobei die Software, wenn sie von einem Prozessor (210) ausgeführt wird, betriebsbereit ist zum:
Empfangen von Daten von einer Vorrichtung (140) in einem Testnetz (135);
Validieren einer Verbindung über eine physikalische Schichtsteuerung, PHY (217), zur Vorrichtung (140) im Testnetz (135), auf den empfangenen Daten basierend;
Drosseln einer Rate der empfangenen Daten von der Vorrichtung (140) im Testnetz (135) auf eine niedrigere Rate als Antwort auf die validierte Verbindung; und
Verarbeiten der empfangenen Daten mit der niedrigeren Rate über eine Medienzugriffssteuerung, MAC (216), worin das Verarbeiten der empfangenen Daten mit der niedrigeren Rate das Ausführen des Testens von Datenpaketen mit der niedrigeren Rate umfasst.

12. Computerlesbares Medium nach Anspruch 6, worin die Vorrichtung (140) Gigabit-Verbindungsfähigkeit angibt und worin das Validieren der Verbindung zur Vorrichtung (140) das Validieren der Gigabit-Verbindungsfähigkeit der Verbindung umfasst.

13. Computerlesbares Medium nach Anspruch 11, worin die Software, wenn sie vom Prozessor (210) ausgeführt wird, um das Testen von Datenpaketen mit der niedrigeren Rate auszuführen, außerdem betriebsbereit ist zum:
Ausführen von mindestens einem eines Ping-Konnektivitätstests und eines dynamisches-Host-Konfigurationsprotokoll (DHCP)-Tests.

14. Computerlesbares Medium nach Anspruch 11, worin die Software, wenn sie vom Prozessor (210) ausgeführt wird, um Daten vom Testnetz (135) zu empfangen, außerdem betriebsbereit ist zum:
Empfangen von Daten von vier verdrillten Zweidraht-Medienverbindungen in betriebsbereiter Kommunikation mit der Vorrichtung (140) im Testnetz (135),
und worin die Software, wenn sie vom Prozessor (210) zum Drosseln der Rate der empfangenen Daten ausgeführt wird, außerdem betriebsbereit ist zum:
Empfangen von Daten von der Vorrichtung (140) im Testnetz (135) mit der niedrigeren Rate als Antwort auf die validierte Verbindung über zwei der vier verdrillten Zweidraht-Medienverbindungen.

## Revendications

1. Procédé comprenant :
la réception de données depuis un dispositif (140) dans un réseau de test (135) ;
la validation, par l'intermédiaire d'un contrôleur de couche physique, PHY (217), une liaison au dispositif (140) dans le réseau de test (135) sur la base des données reçues ;
la restriction d'un débit des données reçues depuis le dispositif (140) dans le réseau de test (135) à un débit inférieur en réponse à la liaison validée ; et
le traitement des données reçues au débit inférieur par l'intermédiaire d'un contrôleur d'accès de support, MAC (216), le traitement des données reçues au débit inférieur comprenant la conduite de test de données de paquet au débit inférieur.

2. Procédé selon la revendication 1, dans lequel le dispositif (140) annonce la capacité de liaison gigabit, et dans lequel la validation de la liaison au dispositif (140) comprend la validation de la capacité gigabit de la liaison.

3. Procédé de la revendication 1, dans lequel la conduite de test de données de paquet au débit inférieur, comprend en outre la conduite d'au moins l'un d'un test de connectivité Ping et d'un test de protocole de configuration d'hôte dynamique, DHCP.

4. Procédé de la revendication 1, dans lequel la réception de données depuis le dispositif (140) dans le réseau de test (135) comprend la réception de données depuis quatre connexions de support à paire torsadée en communication fonctionnelle avec le dispositif (140) dans le réseau de test (135),
et la restriction du débit des données reçues comprend la réception de données depuis le dispositif (140) dans le réseau de test (135) au débit inférieur par l'intermédiaire de deux des quatre connexions de support à paire torsadée.

5. Procédé de la revendication 1, dans lequel :
a) le MAC (216) est un contrôleur à 100 Mégaoctets, Mo, ; et/ou
b) la réception de données depuis le réseau de test (135) comprend la réception de données depuis le réseau de test (135) à 1 Gigabit par seconde, Gbps, le débit inférieur comprenant 100 Mbs ; et/ou
c) la validation de la liaison au dispositif (140) dans le réseau de test (135) sur la base des données reçues comprend la liaison du MAC (216) au gigabit pour valider la liaison.

6. Appareil (105) pour test de réseau comprenant :
au moins un port de réseau (115) qui reçoit des données depuis un dispositif (140) dans un réseau de test (135) ; et
une ou plusieurs interfaces de réseau (215) comprenant un contrôleur de couche physique, PHY (217) et un contrôleur d'accès de support, MAC (216) en communication fonctionnelle avec le port de réseau (115) ;
un processeur (210) couplé aux interfaces de réseau (215) et adapté pour exécuter un ou plusieurs processus ; et
une mémoire (440) configurée pour stocker des instructions exécutables par le processeur (210), les instructions, lorsqu'elles sont exécutées par le processeur (210), amenant le processeur (210) à :
recevoir des données depuis le dispositif (140) dans le réseau de test (135) par l'intermédiaire de l'au moins un port de réseau (115) ;
valider, par l'intermédiaire du PHY (217), une liaison au dispositif (150) dans le réseau de test (135) sur la base des données reçues ;
restreindre un débit des données reçues depuis le réseau de test (135) à un débit inférieur en réponse à la liaison validée ; et
traiter les données reçues au débit inférieur par l'intermédiaire du MAC (216), le traitement des données reçues au débit inférieur comprenant la conduite de test de données de paquet au débit inférieur par l'intermédiaire du MAC (216).

7. Appareil (105) de la revendication 6, dans lequel le dispositif (140) annonce la capacité de liaison gigabit, et dans lequel la validation de la liaison au dispositif (140) comprend la validation de la capacité gigabit de la liaison.

8. Appareil (105) de la revendication 6, dans lequel les instructions, lorsqu'elles sont exécutées par le processeur (210) pour effectuer un test de données de paquet, amènent en outre le processeur (210) à :
conduire au moins l'un d'un test de connectivité Ping et d'un test de protocole de configuration d'hôte dynamique, DHCP.

9. Appareil (105) de la revendication 6, dans lequel les instructions, lorsqu'elles sont exécutées pour recevoir des données depuis le dispositif (140) dans le réseau de test (135) par l'intermédiaire de l'au moins un port de réseau (115), amènent en outre le processeur (210) à recevoir des données depuis quatre connexions de support à paire torsadée en communication fonctionnelle avec le dispositif (140) dans le réseau de test (135).

10. Appareil (105) de la revendication 9, dans lequel les instructions, lorsqu'elles sont exécutées pour restreindre le débit des données reçues depuis le réseau de test (135) au débit inférieur en réponse à la liaison validée, amènent en outre le processeur (210) à :
recevoir des données depuis le dispositif (140) dans le réseau de test (135) au débit inférieur par l'intermédiaire de deux des quatre connexions de support à paire torsadée,
et le processeur (210) reçoit des données depuis le dispositif (140) dans le réseau de test (135) à 1 gigabit par seconde, Gbps, le débit inférieur comprenant 100 Mégabits/seconde.

11. Support lisible par ordinateur tangible, non transitoire ayant un logiciel codé sur celui-ci, le logiciel, lorsqu'il est exécuté par un processeur (210) fonctionnel pour :
recevoir des données depuis un dispositif (140) dans un réseau de test (135) ;
valider, par l'intermédiaire d'un contrôleur de couche physique, PHY (217), une liaison au dispositif (140) dans le réseau de test (135) sur la base des données reçues ;
restreindre un débit des données reçues depuis le dispositif (140) dans le réseau de test (135) à un débit inférieur en réponse à la liaison validée ; et
traiter les données reçues au débit inférieur par l'intermédiaire d'un contrôleur d'accès de support, MAC (216), le traitement des données reçues au débit inférieur comprenant la conduite de test de données de paquet au débit inférieur.

12. Support lisible par ordinateur de la revendication 6, dans lequel le dispositif (140) annonce la capacité de liaison gigabit, et dans lequel la validation de la liaison au dispositif (140) comprend la validation de la capacité gigabit de la liaison.

13. Support lisible par ordinateur de la revendication 11, dans lequel le logiciel, lorsqu'il est exécuté par le processeur (210) pour effectuer un test de données de paquet au débit inférieur est en outre opérationnel pour :
conduire au moins l'un d'un test de connectivité Ping et d'un test de protocole de configuration d'hôte dynamique, DHCP.

14. Support lisible par ordinateur de la revendication 11, dans lequel le logiciel, lorsqu'il est exécuté par le processeur (210) pour recevoir des données depuis le réseau de test (135) est en outre opérationnel pour :
recevoir des données depuis quatre connexions de support à paire torsadée en communication fonctionnelle avec le dispositif (140) dans le réseau de test (135),
et dans lequel le logiciel, lorsqu'il est exécuté par le processeur (210) pour restreindre le débit des données reçues est en outre opérationnel pour :
recevoir des données depuis le dispositif (140) dans le réseau de test (135) au débit inférieur en réponse à la liaison validée par l'intermédiaire de deux des quatre connexions de support à paire torsadée.
